# EUROPEAN PATENT APPLICATION

(11) **EP 4 389 339 A1**
(43) Date of publication of application: **26.06.2024**
(21) Application number: 22214999.9
(22) Date of filing: 20.12.2022
(51) Int. Cl.: B23K 26/03, B23K 26/0622, B23K 26/352, B23K 26/36, B44C 1/22

(54) **A METHOD FOR MONITORING A LASER MACHINING PROCESS OF A LASER MACHINE TOOL**

(71) Applicant: GF Machining Solutions SA, 1217 Meyrin 1 (CH)
(72) Inventor: Jaques, Fabrice, 1242 Satigny (CH); Conseil, David, 74160 Collonges-sous-Salève (FR)
(74) Representative: Li Schrag, Yue

(57) **Abstract**

The present invention is related to a method for monitoring a laser machining process of a laser machine tool, in particular engraving a texture or engraving a cavity, in which a laser source is provided and controlled by a laser-beam-control signal to emit a pulsed laser beam on the surface of the workpiece to ablate the material of the workpiece, wherein the interaction of the laser beam and the material of the workpiece generates a plasma. The method comprises:
a. detecting the light emission of the generated plasma and generating a plasma signal by a sensing device, in particular a photodiode, wherein an optical filter is provided in front of the photodiode to filter out the wavelength of the reflected laser beam; and
b. receiving the plasma signal and the laser-beam-control signal by a signal-processing unit, wherein the plasma signal is an electrical signal including a plurality of pulses; and
c. determining a characteristic value from the pulses of the plasma signal by the signal-processing unit.

## Description

### FIELD OF THE INVENTION

The present invention is related to a method for monitoring a laser machining process of a laser machine tool. Additionally, the present invention is related to a laser machine tool.

### BACKGROUND OF THE INVENTION

Laser ablation methods are widely used for engraving a texture or a cavity on the surface of a physical object by sublimating the material on the surface of the object. The principle used to produce the desired structure, or texture, on the surface of the object is described for instance in the document DE 42 09 933 A1. The process can be seen as "inverted stereolithography" instead of raising the coats for building, the material is sublimated layer by layer by the laser machining as described for instance as well in the further publications, the EP 1189724 A0 and WO 0074891 A1.

Machine tools for machining the objects by laser ablation are well known as well. The European patent application EP 2 301 706 A2 describes for instance a possible technical design of such an apparatus. The machine tool comprises an object holder to mount a three-dimensional solid object to be machined thereon and a laser head for emitting the laser beam on the object to remove the material. Several machine configurations are imaginable. For instance, the object-holder or the laser head, which is linear movable in three, axes (Cartesian X, Y, Z system). Preferably, allowing a higher accuracy and flexibility, the object-holder or the laser head are in addition able to rotate with high precision around two rotational axes.

Once the laser head of the machine tool is positioned at a defined position, the laser beam can be moved within a limited range. The movement of the laser beam can be realized in different ways using different optical setup. One known example is to mount in the machine head several mirrors and actuators, which can direct the laser beam in X, Y, Z directions.

The laser ablation machining occurs in a multiplicity of process steps, in which the surface structure is machined layer wise. The realization of a two or three-dimensional texture on the surface of the object requires to work with many layers and to split the surface of every layer into several patches depending on the curvature of the object. The patch is a defined machining area on the object and during the machining of this area, the machine head stays at one position and only the laser beams moves in this area. Usually the patches do not exceed the size of e.g.175 x 175 mm. Machining the object in layers is due to the simple fact, that a laser beam is just able to ablate a surface down to a limited thickness. In fact, the laser is able to take away 1 to 5 µm of thickness of the material in one layer. The engraving by laser ablation of a typical metallic object requests usually a working in 1 to 200 layers for engraving a texture and 1 to 3000 layers for engraving a cavity passages on the surface of the object.

In order to ensure the quality of the machined part, it is important to monitor the machining process. For example, the amount of the material removal is one essential parameter to access the ablation quality. Since this material removal strongly depends on the laser power, measuring the real laser power of the laser beam emitted on the workpiece can provide an indication of the ablation quality. To achieve this, a power meter can be used to measure the power output of the laser source. However, this value does not indicate if the power is used to ablate the part to be machined.

Another known method is based on the acoustic signal. US 2013025373 discloses a method for measuring the amount of material removed from a target in pulsed laser ablation. The method includes generating a laser beam with a laser generator for ablating the target; driving the laser generator with a delay generator; acquiring the acoustic signal generated when the target is being ablated by the laser beam and generating an electrical signal accordingly with a microphone; amplifying the electrical signal generated by the microphone with a pre-amplifier; displaying an acoustic waveform indicating the intensity of the acoustic signal generated when the target is being ablated by the laser beam with a digital oscilloscope connected to the delay generator and the pre-amplifier; and deducing the amount of material removed from the target in the pulsed laser ablation according to the acoustic waveform in real time.

However, the method of monitoring laser machining process by using acoustic sensor has several drawbacks. First, the sound speed is slow, thus, a huge delay exists between the laser shooting control and the measurement, and for example, the delay can be about one millisecond, if the acoustic sensor is positioned at 30 centimeter apart from the shooting area.

Secondly, the sound delay is not constant, since the successive laser shots on the workpiece happens in many different directions, and thus the delay induced by Doppler Effect varies. Moreover, depending on the laser working frequency (10 to 1000 kHz), a sophisticated sensor instead of a simple audio microphone is required. This increases the costs of the system. In addition, due to preferred high laser working frequency, the acoustic signal of one pulse interacts on that of the next pulses. A complex real time algorithm must be implemented to get meaningful values.

### SUMMARY OF THE INVENTION

It is an objective of this invention to provide a method for monitoring the laser machining process, in particular a process for engraving a texture or engraving a cavity on a workpiece to overcome the drawbacks of the known method. It is an objective of this invention to provide a real-time monitoring of the laser machining process. It is a further objective of this invention to optimize the precision of the monitoring. In particular, it is an objective of the invention to elaborate a method of monitoring the laser machining process with a reduced data production.

According to the present invention, these objectives are achieved through the features of independent claims. In addition, further advantageous embodiments follow from the dependent claims and the description.

The present invention is related to a method for monitoring a laser machining process of a laser machine tool, in particular engraving a texture or engraving a cavity by a laser machine tool. A laser source is provided and controlled by a laser-beam-control signal to emit a pulsed laser beam on the surface of the workpiece to ablate the material of the workpiece. The interaction of the laser beam and the material of the workpiece generates a plasma. The method comprises the following steps:
- detecting the light emission of the generated plasma and generating a plasma signal by a sensing device, in particular a photodiode, wherein an optical filter is provided in the front of the photodiode to filter out the wavelength of the laser beam reflected from the surface of the workpiece;
- receiving the generated plasma signal and the laser-beam-control signal by a signal-processing unit, wherein the plasma signal is an electrical signal including a plurality of pulses and each emitted laser pulse causes one pulse of the plasma signal; and
- determining a characteristic value from the pulses of the plasma signal by the signal-processing unit and mapping the determined characteristic value to an ablation position on the workpiece by combining the plasma signal and the laser-beam-control signal.

Laser ablation is a process to remove the material from a solid surface by emitting a laser beam thereon. The material of the workpiece absorbs the energy from the laser beam and is heated by the absorbed energy. Thus, the material evaporates or sublimates. At the same time, a plasma is formed due to the interaction between the laser beam and the material of the workpiece. Since the plasma is generated due to the interaction between the laser beam and the material, the plasma signal reflects the real ablation condition. Thus, monitoring the generated plasma can directly provide the information about the machining quality. By this way, a reliable machining process monitoring can be achieved. The present invention is not applied for the laser welding or laser cutting.

The light emission of the plasma can be detected by a sensing device. In one advantageous variant, a photodiode is applied to record the light emission of the plasma and convert the detected optical signal to an electrical signal as output signal of the photodiode, which is defined as the plasma signal. Alternatively, other sensing devices, which are suitable for detecting the plasma, can be used, such as a high-resolution camera. However, the signal processing of the images captured by the camera is difficult and the precision of the monitoring depends on the pixel resolution of the camera. By applying the photodiode, the variation of the light emission of the plasma with time can be captured and analyzed precisely by a simple signal-processing algorithm.

When the laser beam is emitted on the workpiece, a part of the laser beam is reflected from the surface of the workpiece. Therefore, an optical filter is arranged in front of the sensing device to filter out the wavelength of the laser beam, such that only the light of the plasma can reach the sensing device. The photodiode and the optical filter can be fixedly mounted in the machine tool in the machining area. Alternatively, they can be built as one unit and be removably mounted in the machine tool.

In order to improve the flexibility of the machine tool, more than one laser sources can be provided in the laser machine tool. It enables to emit different types of lasers suitable for different applications, for example a first laser source with a wavelength of 515nm, a second lase source with a wavelength of 1030 nm and a third laser source with a wavelength of 1064 nm. In this variant, several optical filters or one filter suitable to filter out the laser beam with different wavelengths is accommodated in front of photodiode.

For laser machining, either a continuous-laser or a pulsed-laser can be used. In the present invention, a pulsed laser beam is applied. Each pulse of laser beam causes a huge heat input in a very short time, for example in nano-, pico- or femto- seconds, and thus solid material of the workpiece is evaporated or sublimated which leads to producing plasma. Each laser shot produces plasma, and the emitted light is directly dependent on this plasma. Usual measuring devices are too slow to show what really happens at a femtosecond scale, but photodiode is suitable to detect such signal.

Normally, one laser shot generates one laser pulse. However, in so-called burst mode, each laser shot generates a train of sub-pulses. It means that one laser pulse is split into a train of sub-pulses separated by a few nanoseconds. If the measuring device is slow, the plasma caused by all sub-pulses are integrated in a single pulse of plasma signal. Thus, each plasma pulse represents the plasma signal caused by the sub-pulses of one laser shot in the burst mode. However, if a fast sensing device is applied, it is possible to detect each sub-pulse. In this case, each plasma pulse may represent the plasma signal caused by one sub-pulse. Since the number of sub-pulses in a burst is known, the number of plasma pulses expected can be calculated by means of the multiplication of the number of laser shots and the number of sub-pulses in a burst. Even in the burst mode, the number of laser shots can be directly determined by the laser frequency. For example, if the laser frequency is 200 kHz and the burst number is three, the number of laser shots per second is 200k and the total of sub-pulses is 600k. If a slow sensing device is applied, 200k plasma pulses can be expected. If a fast sensing device is applied, 600k plasma pulses can be expected.

In some embodiments, the laser beam applied is a nanosecond laser, a picosecond laser or a femtosecond laser.

The signal-processing unit is configured to receive both the output signal from the sensing device and the laser-beam-control signal from the machine tool, in particular a controller of the machine tool, then to analyse the electrical signals to achieve an in-situ process monitoring. The signal-processing unit is partially or entirely integrated in the machine tool. Particularly, to ensure a fast communication between the signal-processing unit and the controller, it is arranged closely to the controller of the machine tool, in particular on an acquisition board. Typically, an industrial computer is mounted in the electrical cabinet of the machine tool for controlling the machine tool. For example, industrial computer can serve as the controller of the machine tool. One may integrate the signal-processing unit directly in the same computer. In this way, the plasma signal and the output of the signal-processing unit can be directly shown on the display of the machine tool in real-time. However, it is not excluded that the signal-processing unit is arranged externally to the machine tool computer. In this case, the data will be recorded and displayed with a delay.

For ablation of a texture on the workpiece, the laser beam is not continuously turned on, but switched between the on-state and off-state depending on the pattern of the texture. The laser beam is therefore controlled by the laser-beam-control signal, which is a rectangular electrical signal having a high amplitude and a low amplitude. Normally, the laser-beam-control signal is an aperiodic signal, since the texture has typically an irregular pattern. However, it is not excluded that the laser-beam-control signal is a periodic signal, in particular, it can have a constant duty cycle or variable duty cycle. For example, if the texture is a square, the laser-beam-control signal is a periodic signal because all the lines to be machined have the same length. In order to optimize the amount of the data to be recorded and/or analysed by the signal-processing unit, it is configured to determine the characteristic value when the laser-beam-control signal has a high amplitude. It means, only when the laser beam is emitting, the plasma signal is recorded and analysed. When the laser beam is not emitting, no ablation is conducted, thus, it is not necessary to monitor the process. Such measure can reduce the data amount to be processed.

In another embodiment, we may record and analyze the plasma signal when the laser-beam-control signal is inactive. In this case, the invention is able to detect an abnormal situation, where unwanted laser shots happen. This could be the case, for example, if the laser-beam-control signal was not well grounded, resulting in a noisy signal instead of a low amplitude value.

In one variant, the signal-processing unit is configured to determine a peak value of the amplitude of the pulse of the plasma signal as the characteristic value. Preferably, the signal-processing unit includes a peak detector to determine the peak value of the pulses of the plasma signal.

Advantageously, the signal-processing unit is configured to determine a mean value of the peak values of the amplitude of at least one pulse of the plasma signal as the characteristic value. This allows to reduce the measuring noise, and to reduce the amount of produced data. This is achieved by including a mean-on-dash module in the signal-processing unit.

In the present invention, the ablation is conducted in a dash-by-dash manner. Each dash represents a machining path, which is ablated by a plurality of laser pulses successively by setting the laser-beam-control signal continually to the high amplitude.

A complete texturing machining of the surface of the workpiece consists in ablating a plurality machining layers, with, for each layer, a set of positions that the machining head must reach, to machine a patch for each position for the layer concerned. Within each patch, the ablation is conducted dash by dash. Actually, within one patch, the ablation is conducted line by line. However, if the line is broken by an area, which should not be ablated, the laser beam is turned off and turned on again after this area. In this case, several dashes are ablated along one line. The length of the dashes can vary, because it depends on the pattern to be ablated on the workpiece. The laser-beam-control signal is designed to correspond to the length of the dashes, thus it is typically aperiodic.

In order to monitor the machining process with precision at a dash level, the signal-processing unit is configured to determine a dash mean value as the characteristic value. The dash mean value is defined by the mean value of all peak values of the amplitudes of the pulses of the plasma signal generated by ablating one dash. This provides the possibility to monitor the ablation quality of each dash. Since the position of all dashes on the workpiece are known, the determined dash mean value can be mapped to the ablation positions on the workpiece. If one dash mean value appears to be abnormal, the corresponding dash or the bad machining position can simply be localized.

In further, a threshold value is defined and the characteristic value is compared with the threshold value to determine an abnormality of the ablation, in particular, the abnormality is identified when the characteristic value is smaller than the threshold value.

In a preferred variant, at least one dash mean value is mapped to the position of the at least one dash on the workpiece. The signal-processing unit includes a unit defined as a dash counter, which is configured to identify each dash, from beginning of the machined workpiece based on the laser-beam-control signal. The dash counter is configured to count the dashes successively such that the determined characteristic value of the dash can be associated with the corresponding dash. The dash counter is configured to count the dash starting from zero using the laser-beam-control signal, which is denoted as EM. Every time, when the EM signal turns to the high amplitude, a dash can be detected and counted. For example, when the first layer is machined, the dash counter starts to count the dashes one after another on the first layer. Then the second layer is machined, the dash counter continuously counts the dashes on the second layer. Thus, all the dash-mean-values can be assigned to a corresponding dash. In further, the position of the dash is known through the machining file defining the machining path. By this way, the dash mean values can be mapped to the ablation positions on the workpiece.

In another variant, both a dash- and a layer- counter are implemented. The dash number is reset to zero at the start of each layer, and at the same time, the layer counter is incremented, or set to zero in case of machining the first layer. For example, when the first layer is machined, the layer counter is set to zero, the dash counter starts to count the dashes one after another on the first layer. Then the second layer is machined, the layer counter is incremented to value one, the dash counter restart counting the dashes on the second layer from the beginning.

In a further variant, three counters are implemented: a layer counter, a patch counter, and a dash counter. At beginning of machining, all these three counters are reset to zero, and the dash counter starts counting during the machining of the first patch on the first layer. Then, when starting a new patch, patch counter is incremented and dash counter is reset to zero. As previously, the dash counter continues counting at each new dash of the new patch. When a new layer becomes machined, both patch- and dash counter are reset to zero, the layer counter is incremented, and as usual the dash counter is incremented for each new dash and the patch counter is incremented for each new patch of the new layer.

The layer counter and the patch counter are configured to receive the data from the machining file to be able to count the patches and layers, respectively.

Before the machining, a machining file including machining data must be generated based on the geometry of the workpiece and on the texture to be engraved thereon. The controller of the machine tool can read the machining file to control the mechanical axes and the optical axes to move the laser beam emitted by the laser head to the defined position, since the machining file defines the coordinates of the mechanical axes and the optical axes of all dashes, patches and layers. Generally, the machining file is prepared out of the machine tool and loaded into the machine tool when the machining job starts. However, it is not excluded that the machining file is generated in the machine tool. The generated machining file essentially consists of a machining toolpath, which comprises a succession of positions that the laser machining head must occupy in relation to the workpiece, and, for each position, a succession of ablation operations corresponding to the scanning that the laser beam must perform from this position. Therefore, knowing the dash number and all being determined by the dash counter, the position of each dash on the workpiece is defined in the machining file and can be read from the controller. By mapping the dash mean value to the position of the dash on the workpiece, the method enables to detect the abnormality of the machining and its corresponding position on the workpiece.

In an advantageous variant, in which more precise position of the abnormality can be detected, the dash is logically divided into a plurality of sections and a section mean value is determined as the characteristic value for at least one section. The laser beam is not stopped between the sections of the same dash. The section mean value is defined by the mean value of the peak values of the amplitudes of the pulses of plasma signal caused by the laser pulses applied to ablate the said one section. Every section is defined in a way that the corresponding X, Y, Z position in the workpiece can be determined. For example, each dash could be divided into sections as follows: a first millimeter of the dash is the first section, if dash is longer than a millimeter, the second millimeter is the second section, if dash is longer than 2 millimeter, and the last section is equal or smaller than a millimeter. As a dash is associated to a counter, both a section counter and respectively a pulse counter can also be implemented to identify every section respectively every pulse in the dash. The section counter is set to zero at beginning of a dash, and is incremented at each new section. During the ablation of one dash, the laser beam is moved with a constant speed V_{L}. If the laser frequency f_{L} is applied, the distance between two laser shots can be calculated as d_{LS}= V_{L}/ f_{L}. If this value is known, then the section can be identified by counting the number of the pulses of the plasma signal. For example, the laser beam speed V_{L}=2000mm/s and the laser frequency f_{L}=100kHz, the distance between two laser shots d_{LS}= 2000 mm/s /100kHz= 20µm. If a section is defined with a length of 1 mm, this means, after 50 pulses, the section is finished. These 50 pulses are used to split the dash into sections, using the pulse counter. In this example, a new section begins every 50 pulses.

If the section mean value differs from a threshold value, an abnormality can be determined. Dividing the dashes further into sections enables to more precisely identify the location of the error. In particular, it is useful, if a dash is very long. Moreover, at least one section mean value is mapped to the position of at least one section on the workpiece.

As mentioned previously, the characteristic value serves as an indicator to detect the abnormality of the machining process. Besides this, it can be applied for further diagnoses as described below.

In one variant, the characteristic value can be applied to detect a breakdown of a machine element. For example, a mirror, a laser source or an actuator is broken. In particular, when the determined dash mean values of a number of consecutive dashes are all lower than a first trigger, a breakdown of the machine element is identified. Especially, the first trigger is configurable.

In another variant, the characteristic value can be applied to detect a bad positioning of the workpiece on the machine table In particular, when the determined dashes values of a given number of consecutive dashes are lower than a second trigger, the bad positioning of the workpiece is detected. Especially, the second trigger is configurable.

In further, the characteristic value can be applied to detect the bad blowing condition, for example, the bad direction of nozzle or broken pipe. In this case, the determined dash mean values of a given number of consecutive dashes have a high standard deviation. Thus, the bad blowing condition is detected if the standard deviation of the measured dash mean values of a number of consecutive dashes is higher than a third trigger. Especially, the third trigger is configurable.

Additionally, the characteristic value can be applied to detect the focal point of the laser beam along the focal axis (Z). The known method for determining the focal distance is to machine some small squares on the workpiece (e.g. 2×2 mm), at different Z values around the supposed focal distance, and using a small laser power. By comparing the color of the machined squares, and organizing them by pairs upon absolute relative delta-Z, real focal distance may be set. Using this invention, the same squares (e.g. 2×2 mm) may be machined, at reduced, or at full power with recording of dash mean values. At the end, the exact focal distance can be computed using a specific mathematical algorithm, assuming dash mean values follow a parabolic function of Z-axis position.

In another variant, the characteristic value can be applied to detect a power shift during a laser processing. It means that the measured dash mean values change slowly, starting from a value V1 at beginning of machining and reaching a value V2 later during the machining. The power shift can be fetched by continuously considering a time range [t - delta; t] where pulse energy does not change and computing the mean slope of measured dash mean values in this time range. The power shift is detected if the absolute value of mean slope is higher than a fourth trigger, in particular, the fourth trigger is configurable. The absolute value denotes that the slope should be nearly flat; either a rising or a falling slope is a bad condition.

In one variant, we can detect a bad workpiece geometry, it means the part surface is not at the Z-axis value it was computed in the CAD, resulting in a bad focalization point.

In one variant, the characteristic value can be applied to detect an irregular machining, in particular, a non-repetitive machining between a series of parts. In this case, we assume having the recording of all dash mean value for a reference part machined in good conditions and with right focal distance. For detecting the occurrence of an abnormality on a new part, we can compare dash mean values between the reference part and new part. Abnormality is detected if for a configurable number of consecutive dashes, the difference of dash mean values of the new part and the reference part are all higher than a fifth trigger, in particular the fifth trigger is configurable.

In another variant, the characteristic value can be applied to detect the focus shift of the laser beam due to an optical issue such as heating, bending, dust on the beam path. In this case, the measured dash mean values change slowly, starting from a value V1 at a specific machining time and reaching a value V2 later of the machining. The focus shift is detected if amplitude of the mean slope is higher than a sixth trigger, which is configurable.

In a further variant, the characteristic value can be applied to detect a change of material of the workpiece. For some applications, the workpiece can be made of at least two materials or made of one material and coated with another material. For example, a metal part can be coated by ceramic. During the machining the material to be ablated changes from the metal to ceramic. The characteristic value can be applied to detect which material is currently machined. In this case, an instruction is given by for example including an operating code in the machining file or in any other mean that the material will change and it is asked to detect at what time. Analyzing consecutive mean dash values may be separated in three consecutive groups: the first group for dashes having a stable dash mean value, the second group being a transition between the first and the third group, and third one containing dashes having a stable mean dash value, different of that of first group. The stability criterion is based on standard deviation of configurable "n" dash mean value being smaller than a configurable seventh trigger. When the standard deviation is below the configurable trigger, the material is said homogenous, for example the portion of the part made in metal or in ceramic. When not, the transition zone is detected, for example the transition zone from metal to ceramic.

In a preferred variant, the characteristic value can be used to detect the laser parameters that gives best results in terms of laser material interaction. In order to achieve this, several test parts for example having a size of 5 × 5 mm with various sets of laser parameter are machined. For each test part, a different laser parameter setting is applied. The goal is to automatically find the one having the best performance, which is defined by highest dash mean value or a lowest standard deviation of dash mean value.

In a variant, the characteristic value can be used to determine the volume of removed material, in particular the volume of the removed material by each laser shot, the volume of the removed material by ablating each dash, the volume of the removed material by ablating each section.

As mentioned above, based on the dash mean value or the slope of the dash mean value changes within a defined time range or the standard deviation of the dash mean value different diagnostic can be performed.

Advantageously, laser machining parameters and/or machining conditions and/or device information are combined with the information related to the dash mean value for the diagnostic. For example, the information related to valve and nozzle can be used as additional information to detect the blowing condition.

The dash mean value can be displayed in real-time on the control panel during ablation or stored and displayed after the machining.

In addition, a first plasma signal recorded during ablation of a texture on a first workpiece is stored as a reference signal, which can be compared with a second plasma signal recorded during the ablation of the same texture on the second workpiece to detect the machining instability of the machining of the second workpiece.

It is possible to display the machining quality directly on the image of the texture by assigning different colours to dash mean values. This graphic illustration can also be displayed in real-time during the machining to provide a clear visual presentation of the machining quality.

If the abnormality is detected or a diagnostic is performed, one of the following actions is taken:
a. stopping the machining and showing the location of the abnormality on a 2D or 3D representation of the workpiece;
b. continuing the machining and storing the location of the abnormality for an ulterior display; and
c. adjusting the machining parameters and/or mechanical machining conditions, such as blowing, laser power, laser frequency, Z-axis position.

The present invention is further related to a system for monitoring the laser machining process. The system includes a sensing device in particular a photodiode, an optical filter and a signal-processing unit. The sensing device is configured to detect the light emission of a plasma generated between the interaction of a laser beam and the workpiece and to generate a plasma signal. The optical filter is provided in front of the sensing device to filter out the wavelength of the reflected laser beam. The signal-processing unit is configured to receive the plasma signal and a laser-beam-control signal, wherein the plasma signal is an electrical signal including a plurality of pulses to determine a characteristic value from the pulses of the plasma signal and to map the determined characteristic value to an ablation position on the workpiece by combining the plasma signal and the laser control signal.

The present invention is also related to a laser machine tool for engraving a texture or engraving a cavity on a workpiece. The laser machine tool comprises a laser head, a controller, a machining area and the system for monitoring the laser machining process. The laser head includes a laser source for emitting a pulsed laser beam on the surface of the workpiece to ablate the material of the workpiece. The controller is configured to generate a laser-beam-control signal having a high amplitude and a low amplitude, the laser beam is turned on when the control signal has a high amplitude, and the laser beam is turned off when the control signal has a lower value.

### BRIEF DESCRIPTION OF THE DRAWINGS

In the following, a more particular description of the present invention is further described. The embodiments are described and explained with details with reference to accompanying drawings in which:
- Fig. 1 and Fig 2:: Illustrate a simplified view of a machine tool for laser ablation and a laser head thereof;
- Fig. 3:: illustrates one example of machining path of one patch with dashes;
- Fig. 4:: illustrates schematically a part of the machine tool;
- Fig. 5:: illustrates schematically a signal-processing unit;
- Fig. 6 and Fig.7:: illustrates examples of plasma signal
- Fig. 8:: illustrates a laser-beam-control signal.
- Fig. 9:: illustrates a patch with several dashes;
- Fig. 10:: illustrates the plasma signal in relation to the laser power;
- Fig. 11:: illustrates examples of determined dash mean values;
- Fig. 12:: illustrates the position information of dashes;
- Fig. 13:: illustrates one example of a plasma signal;
- Fig. 14:: illustrates the dash mean values of the plasma signal shown on fig 13;
- Fig. 15:: illustrates the laser-beam-control signal related to the plasma signal shown on fig 13; and
- Fig. 16:: illustrates a patch including long dashes and resulting sections.

### EXEMPLARY EMBODIMENTS

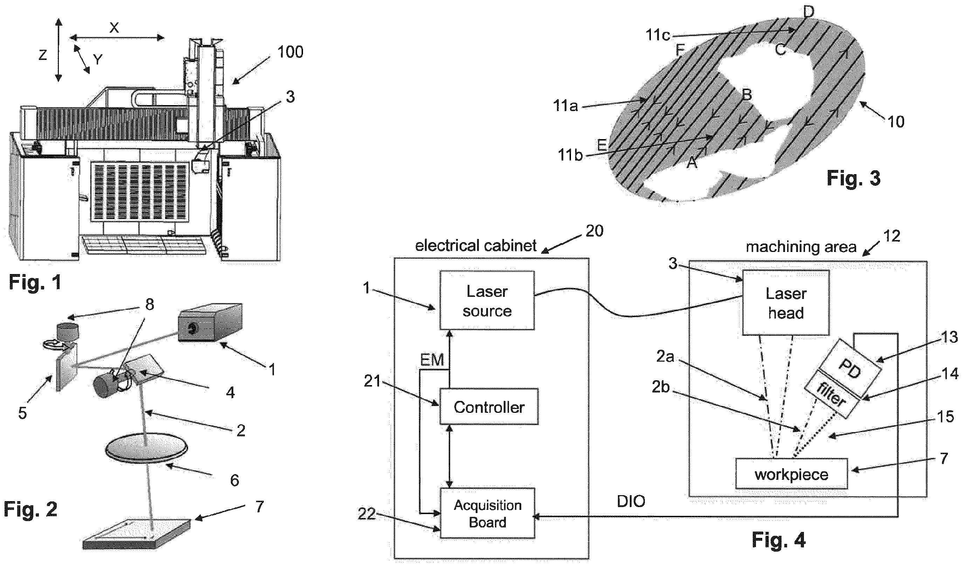

Figure 1 shows a simplified view of a laser machine tool 100 for laser texturing respectively laser engraving. The machine tool includes a laser head 3 for emitting and moving the laser beam and a machine table for clamping a workpiece thereon. The laser head 3 may move in the three directions X, Y and Z. Advantageously, the laser head is also mobile in rotation about two rotation axes A and B to obtain a high machining accuracy and a high machining flexibility. The laser head receives the laser beam from a laser source 1, and comprises some beam deflecting devices such as mirrors and actuators, and optical devices such as focalizing lens. The laser head 3 and the workpiece are positioned in relation to one another according to five mechanical axes, which makes it possible to orient the direction of the laser beam emitted and to position the focal point of the laser beam on the surface of the workpiece for ablation.

Figure 2 depicts the operation of the mirrors and actuators of the laser head. The laser source 1 emits a laser beam 2, or more specifically a pulsed laser beam. The laser beam 2 is reflected by the mirrors 4 and 5, which respectively make it possible to define the position of the point of projection of the laser beam on the surface of the workpiece 7. In addition, actuators 8 are provided to make it possible to control the angular position of the mirrors 4 and 5.

After the deflection by mirrors, the laser beam passes through a lens 6 with a dynamic focusing correction, commonly called F-theta lens. This device is arranged in the laser head to define the point of impact of the laser beam with the surface of the workpiece in a plane situated in the focal range considered. The focal length is an important parameter to allow the ablation. Usually, the systems used with a focal length of for example 430mm make it possible, from a given position of the laser head 3, to machine, using the actuators, a planar surface measuring 300×300 mm, called marking field. On the other hand, when the surface of the workpiece to be machined is not planar, the focusing capacity of the lenses limits the marking field in the directions X and Y. If the curvature of the surface of the workpiece is significant, it is then necessary to reduce the dimensions on X and Y of the marking fields for the variation on Z in each marking field.

For engraving/texturing of the workpiece surface, it is necessary to divide the workpiece surface into a plurality of defined areas called patches. Figure 3 illustrates the machining path along which the laser beam moves to engrave one patch 10. When the laser beam hits the surface, the material of the surface is ablated. The dark area presents the area of the surface, where the ablation should be conducted. The white area presents the area where no ablation is required. The lines symbolize the ablation path of the laser beam. The figure 3 is merely used to show the principle, thus does not present all the ablation paths required for the dark area. Normally, the ablation is conducted within the patch line by line. At the beginning of each line, the laser beam is turned on, and at the end of each line, the laser beam is turned off. Each line illustrates one dash 11a, 11b and 11c. Normally, one dash starts from one end of the line and ends at the other end of the line. However, if the line goes through the white area, the laser beam will be turned off to prevent the ablation of the white area. In this case, a new dash begins again from another position in the dark area. For example, the first dash with the reference number 11a starts at the beginning of the first line at the point E and ends at the end of the first line at the point F. The second dash with the reference number 11b starts at the point A and ends at the point B. At the point B the ablation cannot be continued because the next position is in the white area, thus, the laser beam is turned off at the point B and turned on again at the point C to ablate the path dash between C and D. Thus, the line between the point C and D forms a third dash with the reference number 11c. The length of the dashes can vary and depends on the texture to be ablated on the workpiece.

Figure 4 shows schematically a part of the machine tool, in particular the machining area 12 and the electrical cabinet 12. A laser head is provided in the machining area to emit the laser beam 2a on the surface of the workpiece 7 for ablation. A plasma 15 is formed due to the interaction between the laser beam and the material of the workpiece. At the same time, a part of the emitted laser beam 2b is reflected from the surface of the workpiece. A photodiode 13 is removably mounted in the machining area close to the workpiece to be able to detect the light of the plasma and to convert the detected optical signal to an electrical signal defined as plasma signal denoted as DIO. In the present invention, the reflected laser beam is not to be used for monitoring the machining process, thus, it must be filtered out. In order to separate the reflected laser beam 2b and the plasma, an optical filter 14 is arranged in the front of the photodiode 13, in particular the filter is mounted on the photodiode.

In the electrical cabinet 20 a laser source 1, a controller 21 and an acquisition board 22 are integrated. However, it is also possible to arrange the acquisition externally to the electrical cabinet. The output of the photodiode is connected to the acquisition board to send the electrical signal DIO defined as plasma signal representing the detected plasma to the acquisition board. The controller is connected to the laser source to control the machining including the emitting of the laser beam, as well as to the acquisition board to feed information required for the calculation of characteristic value, for example a laser-beam-control signal EM and laser frequency of the laser beam to a signal-processing unit integrated on the acquisition board. Additionally, a bi-directional communication between the controller and the acquisition board is available.

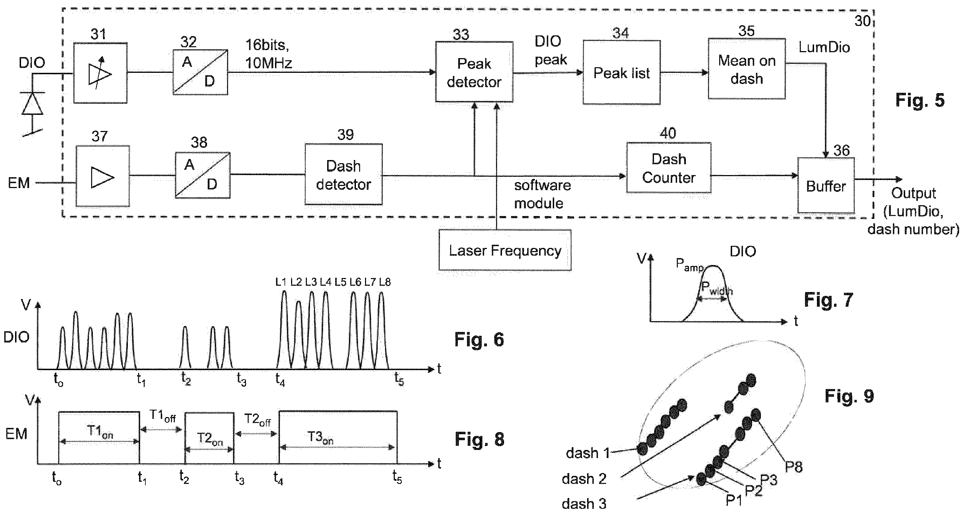

Figures 6 and 8 illustrate one example of a plasma signal DIO and the laser-beam-control signal EM. The laser-beam-control signal is typically a rectangular signal having a low amplitude value, e.g. 0V and a high amplitude of e.g. 5V. When the amplitude is high, the laser shooting starts, namely the laser beam is emitting. When the amplitude is set to low, the laser shooting stops and no laser beam is emitting. Thus, each period of the laser-beam-control signal has two time intervals Tₒₙ and T_{off} to define the time intervals when the laser beam is turned on and off, respectively. Each time interval with Tₒₙ defines the time period for ablation one dash. The time interval with T_{off} defines for example, the time period for the movement of the optical axes from the end of one dash to the beginning of the next dash. These time intervals depend on the shape of the texture to be ablated on the surface. The time intervals of laser shooting Tₒₙ depend in particular the length of the dashes. Figure 8 shows the laser-beam-control signal used to ablate the patch shown in figure 9, which for simplicity only include three dashes. In figure 8, the duration of the three time intervals of laser shooting T1ₒₙ, T2ₒₙ, and T3ₒₙ are different, because the length of the three dashes dash 1, dash 2 and dash 3 to be ablated are not equal. As shown in figure 9 the first dash is longer than the second dash but shorter than the third dash, thus T1ₒₙ is bigger than T2ₒₙ but smaller than T3ₒₙ. During the laser shooting, the plasma is generated. Thus, the plasma signal is detected by the photodiode during the laser shooting time interval Tₒₙ and no plasma signal is detected by the photodiode when the amplitude of the laser-beam-control signal is low, namely during the time period T_{off}. For example, the laser beam is emitting during the time intervals T1ₒₙ, T2ₒₙ, and T3ₒₙ and turned off during the time interval T1_{off}, and T2_{off}. Accordingly, the plasma signal is detected at the same period as shown in figure 6. If the ablation works in a correct manner, each laser shooting generates one pulse of the plasma signal. In order to ablate one dash, generally several laser shots are required. Therefore, during ablation of one dash the generated plasma signal comprises a plurality of pulses. If a series of pulses is missing, an error of ablation can be detected.

Figure 7 shows one single pulse of the plasma signal with a pulse width P_{width} and an amplitude Pₐₘₚ. The amplitude and the width of the pulses can vary. Figure 9 shows a simplified illustration of laser shoots on the dashes. Each black point illustrates one laser shot. The number of laser shot depends on the laser frequency. For example, laser frequency of 500 kHz means 500K laser shots per second. For example, the first three laser pulses are emitted at the positions P1, P2 and P3 of the dash 3 and the resulted pulses of the plasma signal is indicated in figure 6 with symbols L1, L2 and L3. The laser shots can overlap, but the illustration is simplified, thus, no overlap is shown. For the first dash, all the laser shots are correctly performed, e.g. in total 6 laser shots are applied, thus, 6 plasma pulses are detected. For the second dash and the third dash, the machining does not work perfectly. Some laser shots are missing. For example, for dash 3 the fifth laser shot is missing, thus, the fifth pulse of the plasma signal L5 is missing. Its amplitude is then defined as zero.

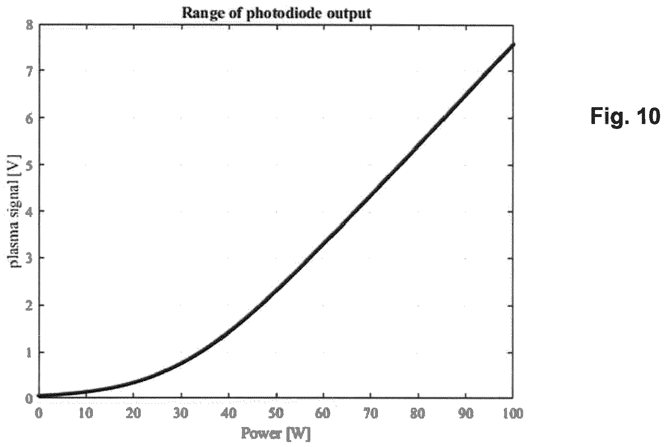

Figure 5 shows a schematic of the signal-processing unit 30. The output of the photodiode is connected to a first amplifier 31 configured to scale the measured plasma signal. In particular, the first amplifier is a variable-gain amplifier, which is able to amplify the plasma signal with different gains, because the amplitude of the plasma signal can vary in a range of mV to several Volt. Figure 10 shows an example of the amplitude of the plasma signal in relation to the laser power. As shown in figure 10, the amplitude of the plasma signal increases with the increasing of the laser power. However, the relationship between the amplitude of the plasma signal and the laser power is not linear. The signal-processing unit is configured to be able to detect the plasma signal in different ranges to ensure the good resolution of the plasma signal. A selectable gain can be adjusted from a range of 0 dB to 70 dB. The amplifier can be integrated in the acquisition board or inside of the photodiode.

A first A to D converter (A/D) 32 is provided at the output of the first amplifier for converting the analog signal to a digital signal for further processing. It is a high-resolution and fast A to D converter with typically 16 bits and 10 MHz sample rate. The range of A/D is adjustable between several millivolts to 10 Volts. The selectable voltage ranges could for example be -10V to 10V, -5V to 5V, -2V to 2V, -1V to 1V, -500mV to 500mV, -200mV to 200mV, and -100mV to 100mV.The amplitude of the plasma signal DIO depends on the laser power applied for the machining, but is not linearly variable with the laser power. For example, if 100% laser power is applied, the amplitude of the plasma signal is 10 V, if 60% of laser power is applied, the amplitude of the plasma signal is 5 V. In order to ensure the conversion accuracy, the signal range of A/D converter must be adjusted. In one variant, the range of A/D is adjusted automatically based on the laser power applied for ablation. For example, the signal for controlling the laser power is used to determine the signal range of the A/D converter.

The laser-beam-control signal EM is also first amplified by a second amplifier 37 and the amplified signal is fed into a second A to D converter 38. In this variant, one multiple-channel A to D converter, e.g. A to D converter having four channels is applied for converting the amplified plasma signal and the amplified laser-beam-control signal. Using the multiple-channel A to D converter, the plasma signal DIO and the laser-beam-control signal EM can be automatically synchronized. No further measures must be taken to ensure the synchronization of these two signals, since results of conversion are stored by pairs (DIO + EM), at each sample period.

A dash detector is connected to the output of the second A/D converter and configured to identify the start and the end of ablation of one dash based on the EM signal.

In further, a dash counter is connected at the output of dash detector to identify each dash with its sequential order number, particularly to count the dash one-by-one.

A peak detector is connected at the output of the first A/D converter to identify the peak value of the amplitude of each pulse of the plasma signal by combining the plasma signal DIO and the laser control signal EM. The peak detector is configured to process the signal pulse by pulse. The output of the dash detector provides the information concerning the start and end of ablation of one dash. When the peak detector receives the information that the ablation of one dash begins, the peak detector starts to process the plasma signal generated during the ablation of this dash. When the peak detector receives the information that the ablation of one dash ends, the peak detector stops processing the signal. The peak values are determined in the peak detector and stored in the peak list. Each pulse of plasma signal generated by one laser shot is measured on signal DIO and produces a single peak value. The plurality of N laser shots produces a list of N peak values. Additionally, the laser frequency is fed into the peak detector. Using this information it is possible to calculate how many plasma pulses should be expected within one dash. Even if one plasma pulse is missing due to abnormal machining conditions, the number of expected plasma pulses can be correctly determined such that the dash mean value can be correctly calculated, since the dash mean value is defined as the sum of the all peak values of all pulses generated during ablating one dash divided by the number of expected pulses. The module mean-on-dash 35 is configured to calculate this value denoted as LumDio. For example, as shown in figures 6 and 8 at the time t₄ the laser-beam-control signal EM is turned from low to high, the ablation of this new dash (dash 3) starts. The peak detector starts to determine the peak value of the amplitude of pulses (DIO peak). First, the peak value of the first pulse L1 is determined by the peak detector and stored in the peak list, and then the peak value of the second pulse L2 is determined by the peak detector and stored in the peak list, and so on. After the peak value of the pulse L8 is determined and stored in the peak list, the laser-beam-control signal is turned to low at the time t₅, thus the peak detector stops to determine peak values and the mean-on-dash 35 can be activated.

Afterwards, the mean value of the peak values of the eight pulses LumDio is calculated by the mean-on-dash module. Even if the fifth pulse was not detected, expected number of pulses is correctly calculated based on the laser frequency and the laser-beam-control signal EM. The amplitude of the plasma signal can vary due to different physical effects. Even if the same laser power is applied, the light (or plasma) generated during the ablation can vary, thus, the amplitude of the pulse signal which depends on the intensity of the generated light varies as well. The mean value symbolized with LumDio is more reliable for the prediction of errors than each single plasma signal pulse. The dash mean value and the dash number are stored in a buffer 36 and can be further communicated to the control unit of the machine tool.

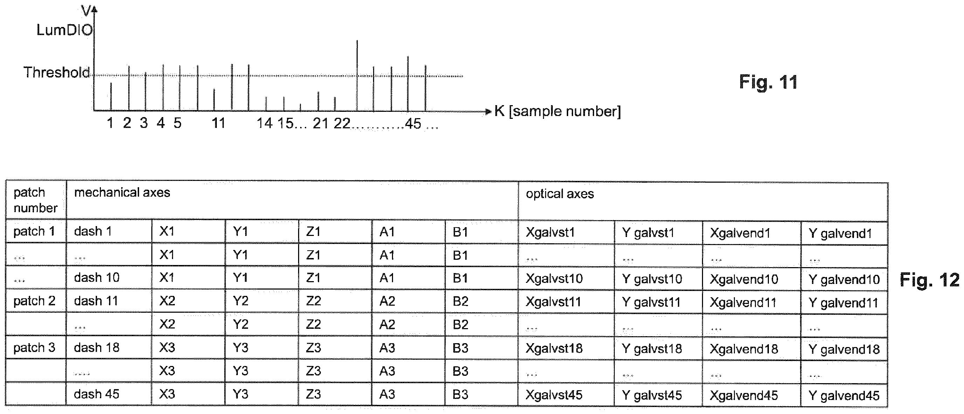

Figure 11 shows one example of application of the determined dash mean values. The value of each sample corresponds to a mean value of the amplitudes of the pulses of the plasma signal generated during ablation of one dash. it shows that the dash mean value varies from dash to dash even if a constant laser power is applied. In a preferred execution, a threshold value is defined such that each dash mean value can be compared with the threshold value. If the dash mean value is lower than the threshold value, an abnormality of the ablation within this dash can be derived. For example, the dash numbers 1, 11, 14-22 shown in figure 11 having a value lower than the threshold value, thus, it can be derived that the machining of these dashes has an abnormality.

The mechanical axes positions and the optical axes positions to machine all dashes are explicitly defined in the machining file describing the laser path of the machining as shown in figure 12. For each dash or a section of the dash, the coordinates X, Y, Z on the workpiece can be computed since the positions of the mechanical axes (e.g. X1,Y1,Z1,A1,B1) and the positions of the optical axes (e.g. Xgalvo1, Ygalvo1) are known. Therefore, each detected plasma signal can be assigned to the position on the workpiece. If an abnormality for one dash is detected by monitoring the plasma signal, it can be located on the workpiece.

Since the machine head stays at the same position during ablation one patch, the mechanical axes for machining all the dashes of the same patch are kept at the same position. For example, for machining all dashes of patch 1, the mechanical axes are moved to the position with coordinates X1, Y1, Z1, A1 and B1, and for machining all dashes of patch 2, the mechanical axes are moved to a different position with the coordinates X2, Y2, Z2, A2 and B2. Within one patch, the laser beam is moved by the optical axes to ensure a high-speed movement of the laser beam. The dash position is therefore defined by the optical axes with a start position in X and Y direction (Xgalvst, Ygalvst) and an end position in X and Y direction (Xgalvend, Ygalvend). Thus, the optical axes coordinates for different dashes are different.

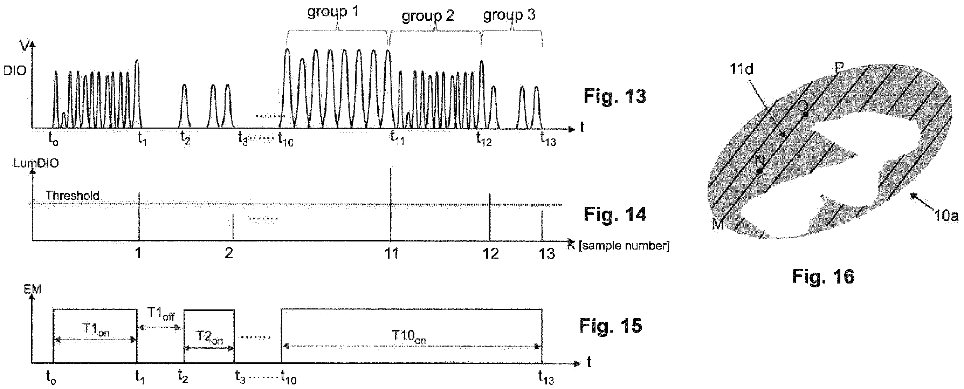

Figures 13, 14, 15 and 16 shows an advanced mode to detect the abnormality in a subregion within one dash, namely in a section. As shown in figure 16 illustrating one patch 10a, the dash with the reference number 11 is divided into three sections. The first section is from the point M to the point N, the second section is from the point N to the point O and the third section is from the point O to the point P. The plasma signal generated during ablation of this dash is also divided into three groups corresponding to the three sections. In this embodiment, the mean value of the peak value of the amplitude of the pulses is calculated for each group, not only for the whole dash. As illustrated in figure 14, three section mean values with the sample number 11, 12 and 13 are calculated for this dash. By this way, the localisation of the error respectively the abnormality can be determined more precisely. For example, the sample 13 has a lower value than the threshold, thus, it can be detected that an ablation error has occurred at the section 3 of this dash between the point O and the point P.

### LIST OF REFERENCES

- 1: laser source
- 2, 2a, 2b: laser beam
- 3: laser head
- 4, 5: mirrors
- 6: lens
- 7: workpiece
- 8: actuators
- 10: patch
- 11a, 11b, 11c: dash 1, dash 2, dash 3
- 12: machining area
- 13: photodiode
- 14: optical filter
- 15: plasma
- 20: electrical cabinet
- 21: controller
- 22: acquisition board
- 30: signal-processing unit
- 31: first amplifier
- 32: first A/D converter
- 33: peak detector
- 34: peak list circuit
- 35: mean on dash calculation circuit
- 36: buffer
- 37: second amplifier
- 38: second A/D converter
- 39: dash detector
- 40: dash counter
- 100: laser machine tool

## Claims

1. A method for monitoring a laser machining process, in particular a process for engraving a texture or engraving a cavity on a workpiece by a laser machine tool (100), in which a laser source (1) is provided and controlled by a laser-beam-control signal to emit a pulsed laser beam on the surface of the workpiece (7) to ablate the material of the workpiece, wherein the interaction of the laser beam and the material of the workpiece generates a plasma comprising:
a. detecting the light emission of the generated plasma and generating a plasma signal by a sensing device, in particular a photodiode (13), wherein an optical filter (14) is provided in front of the photodiode to filter out the wavelength of the laser beam reflected from the surface of the workpiece;
b. receiving the generated plasma signal and the laser-beam-control signal by a signal-processing unit (30), wherein the plasma signal is an electrical signal including a plurality of pulses; and
c. determining a characteristic value from the pulses of the plasma signal by the signal-processing unit and mapping the determined characteristic value to an ablation position on the workpiece by combining the plasma signal and the laser-beam-control signal.

2. The method according to claim 1, wherein the signal-processing unit is configured to determine a peak value of the amplitude of the pulse of the plasma signal as the characteristic value.

3. The method according to claim 2, wherein the signal-processing unit is configured to determine a mean value of the peak values of the amplitudes of at least one pulse of the plasma signal as the characteristic value.

4. The method according to one of claims 1 to 3, wherein the ablation is conducted in a dash-by-dash manner and each dash represents a machining path, which is ablated by a plurality of laser pulses successively by setting the laser-beam-control signal continually to the high amplitude and the signal-processing unit is configured to determine a dash mean value as the characteristic value, wherein the dash mean value is defined by the mean value of the peak values of the amplitudes of the pulses of the plasma signal generated during the ablation of one dash.

5. The method according to claim 4, wherein the dash is divided into a plurality of sections and a section mean value is determined as the characteristic value for at least one section, wherein the section mean value is defined by the mean value of the peak values of the amplitudes of the pulses of plasma signal generated during the ablation of one section.

6. The method according to one of claims 1 to 5, wherein the signal-processing unit includes a unit defined as a dash counter (40), which is configured to identify each dash based on the laser-beam-control signal.

7. The method according to claim 6, wherein the dash counter is configured to count the dashes successively such that the determined characteristic value of the dash can be associated with the corresponding dash.

8. The method according to one of claims 1 to 7, wherein a threshold value is defined and the characteristic value is compared with the threshold value to determine an abnormality of the ablation, in particular abnormality is mapped to its position on the workpiece.

9. The method according to claim 8, wherein one of the following actions is taken when the abnormality is identified:
a. stopping the machining;
b. adjusting the machining parameters; and
c. adjusting the mechanical machining conditions.

10. The method according to one of claims 1 to 9, wherein the characteristic value is applied to conduct one or more of the following:
a. detecting a breakdown of a machine element;
b. detecting a bad positioning of the workpiece on the machine table;
c. detecting a bad blowing condition;
d. detecting the focal point of the laser beam along the focal axis (Z);
e. detecting a power shift during the laser processing;
f. detecting a bad workpiece geometry;
g. detecting an irregular machining;
h. detecting a focus shift caused by the optical elements;
i. detecting a change of material of the workpiece;
j. determining the parameters setting which gives best results based on iterative machining; and
k. calculating the volume of the ablated material.

11. A system for monitoring the laser machining process, in particular a process for engraving a texture or engraving a cavity on a workpiece by a laser machine tool (100), in which a laser source (1) is provided and controlled by a laser-beam-control signal to emit a pulsed laser beam on the surface of the workpiece to ablate the material of the workpiece, wherein the interaction of the laser beam and the material of the workpiece generates a plasma comprising:
a. a sensing device configured to detect the light emission of the generated plasma and to generate a plasma signal, in particular the sensing device is a photodiode (13);
b. an optical filter (14) added on the sensing device to filter out the wavelength of the reflected laser beam; and
c. a signal-processing unit (30) configured to receive the plasma signal being an electrical signal including a plurality of pulses and a laser-beam-control signal and to determine a characteristic value from the pulses of the plasma signal and to map the determined characteristic value to an ablation position on the workpiece by combining the plasma signal and the laser-beam-control signal.

12. A laser machine tool (100) for engraving a texture or engraving a cavity on a workpiece comprising:
a. a laser head (3) including a laser source (1) for emitting a pulsed laser beam on the surface of the workpiece to ablate the material of the workpiece;
b. a controller (21) configured to generate a laser-beam-control signal having a high amplitude and a low amplitude and the laser beam is turned on when the control signal has a high amplitude and the laser beam is turned off when the control signal has a low amplitude;
c. a machining area where the workpiece is positioned; and
d. the system for monitoring the laser machining process according to claim 11.

13. The laser machine tool according to claim 12, wherein the signal-processing unit and the controller are integrated in one industrial computer.

14. The laser machine tool according to claim 12 or 13, wherein the machine tool comprises a display and one or more of the following can be displayed on the display:
a. representation of the characteristic value of the laser/material interaction; and
b. it's position on the workpiece.
